(19) Europäisches Patentamt
European Patent Office
Office européen des brevets

(11) **EP 2 566 247 B1**

(12) **EUROPEAN PATENT SPECIFICATION**

(45) Date of publication and mention
of the grant of the patent:
**09.04.2014 Bulletin 2014/15**

(51) Int Cl.:
*H04W 36/30* *(2009.01)*    *H04W 36/32* *(2009.01)*
*H04W 36/00* *(2009.01)*

(21) Application number: **12181837.1**

(22) Date of filing: **27.08.2012**

(54) **Handover apparatus and method of portable terminal**

Übergabe-Vorrichtung und -verfahren eines tragbaren Endgeräts

Appareil et procédé de transfert de terminal portable

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.08.2011 KR 20110087063**

(43) Date of publication of application:
**06.03.2013 Bulletin 2013/10**

(73) Proprietor: **Samsung Electronics Co., Ltd.
Suwon-si, Gyeonggi-do, 443-742 (KR)**

(72) Inventors:
• **Lee, Ki-Tae**
**443-742 Gyeonggi-do (KR)**
• **Park, Hee-Bum**
**443-742 Gyeonggi-do (KR)**

(74) Representative: **Nederlandsch Octrooibureau
P.O. Box 29720
2502 LS The Hague (NL)**

(56) References cited:
**EP-A1- 2 048 892          EP-A2- 1 215 930
US-A1- 2009 156 210**

• **HASSWA A ET AL: "Generic vertical handoff
decision function for heterogeneous wireless
networks", WIRELESS AND OPTICAL
COMMUNICATIONS NETWORKS, 2005. WOCN
2005. SECOND IFIP INTERNATIONAL
CONFERENCE ON DUBAI, UNITED ARAB
EMIRATES UAE MARCH 6 - 8, 2005,
PISCATAWAY, NJ, USA,IEEE, 6 March 2005
(2005-03-06), pages 239-243, XP010801891, DOI:
10.1109/WOCN.2005.1436026 ISBN:
978-0-7803-9019-5**
• **ALI CALHAN ET AL: "An adaptive neuro-fuzzy
based vertical handoff decision algorithm for
wireless heterogeneous networks", PERSONAL
INDOOR AND MOBILE RADIO
COMMUNICATIONS (PIMRC), 2010 IEEE 21ST
INTERNATIONAL SYMPOSIUM ON, IEEE,
PISCATAWAY, NJ, USA, 26 September 2010
(2010-09-26), pages 2271-2276, XP031837964,
ISBN: 978-1-4244-8017-3**

**EP 2 566 247 B1**

**Description**

**BACKGROUND OF THE INVENTION**

1. Field of the Invention

The present invention relates to the field of telecommunication networks. More specifically, the present invention relates to a method for handling a handover in a wireless telecommunication network.

2. Description of the Related Art

Recent wireless communication technologies have advanced to provide both voice and data communication services. To provide a high-quality wireless data communication service, efforts to increase a data rate evolve from Wideband Code Division Multiple Access (WCDMA) to Long Term Evolution (LTE), which is a project within the Third Generation Partnership Project (3GPP) to cope with future requirements. While 802.11B/G is commonly used in Wireless Local Area Network (WLAN), 802.11n is being commercialized. Goals of these standards include improving efficiency, lowering costs, improving services, making use of new spectrum opportunities, and better integration with other open standards.

Cellular field and WLAN field of the wireless communication technologies have their own unique features. The WLAN field exhibits high data rate but scarcely supports mobility. In contrast, the cellular field guarantees high mobility but exhibits low data rate. However, the LTE of the 3GPP can enhance both the mobility and the data rate, and 802.11n of the WLAN field can support a much higher data rate.

To support even higher data rate, smaller cell sizes than in the past scheme are planned such that various cell sizes exist in the current wireless communication environment. As such, different wireless communication techniques are evolving to meet the new demand. To support them in an environment including various cells overlapping, multimode mobile terminals are currently under development. The multimode supporting terminal supports a handover for the seamless service between the different wireless communication techniques, and researches are concentrating on more efficient solutions.

A conventional mobile terminal mostly hands over to a cell of high Received Signal Strength Indicator (RSSI) among candidates of neighbor cells when the RSSI of the current serving cell falls below a threshold.

Document EP 121 5930 A2 shows a method and apparatus to deliver improved handover criteria. Location, direction and speed of the MS are determined. Based on these parameters together with the quality and strength of the signal of the adjacent candidate BTS cells, the best candidate cell is assessed and subsequently a handoff request to the best cell is carried out. One decision criteria can be the longest duration time the MS would reside in the candidate cell.

It is likely that in the current scheme the cell of high RSSI can become the serving cell regardless of the handover overhead or the serviceable time. Therefore, there is a need for an improved method of providing a handover in a new environment that addresses the above-discussed deficiencies.

**SUMMARY OF THE INVENTION**

The present invention provides a handover method and apparatus according to independent claims 1 and 6. Advantageous embodiments are described in the dependant claims for reducing overhead of a portable terminal traveling, by providing a higher priority to a cell having various sizes according to a predetermined criteria in a wireless communication environment of various cell sizes.

Other aspects, advantages, and salient features of the invention will become apparent to those skilled in the art from the following detailed description, which, taken in conjunction with the annexed drawings, discloses exemplary embodiments of the invention.

**BRIEF DESCRIPTION OF THE DRAWINGS**

The above and other aspects, features, and advantages of certain exemplary embodiments of the present invention will be more apparent from the following description taken in conjunction with the accompanying drawings, in which:

FIG. 1 is a block diagram of a handover apparatus of a portable terminal useful for understanding the present invention;
FIG. 2 is a diagram of a first network, neighbor networks, and a second network in a handover method of the portable terminal useful for understanding the present invention;
FIG. 3 is a chronological flowchart of the handover method of the portable terminal based on a travel speed of the portable terminal useful for understanding the present invention;
FIG. 4 is a chronological flowchart of the handover method of the portable terminal based on improvement of communication quality according to an embodiment of the present invention; and
FIG. 5 is a chronological flowchart of the handover method of the portable terminal based on the travel speed and the communication quality of the portable terminal useful for understanding the present invention.
Throughout the drawings, like reference numerals will be understood to refer to like parts, components and structures.

## DETAILED DESCRIPTION

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

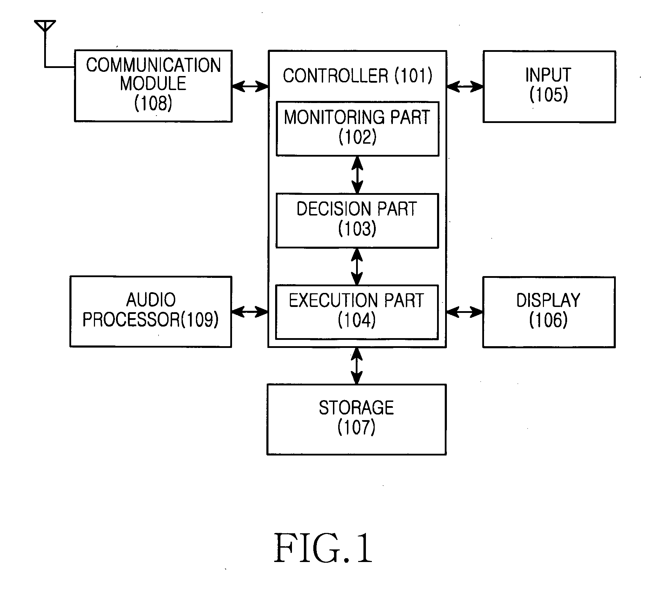

FIG. 1 is a block diagram of a handover apparatus of a portable terminal useful for understanding of the present invention. As shown in FIG. 1, the handover apparatus of the portable terminal can include a controller 101, a monitoring part 102, a decision part 103, an execution part 104, an input 105, a display 106, a storage 107, a communication module 108, and an audio processor 109.

The controller 101 controls operations of the portable terminal. The controller 101 can include the monitoring part 102, the decision part 103, and the execution part 104. In an alternate example, the parts 102-104 does not have to be all integrated in the controller but can be realized separately or in any combination of the parts can be embodied in the controller.

The monitoring part 102 checks a travel speed and communication quality of the portable terminal during the movement in a service coverage area of a first network. Herein, the communication quality can be determined using any one of Received Signal Strength Indicator (RSSI), Signal to Noise Ratio (SNR), Signal-to-Interference-and-Noise Ratio (SINR), Bit Error Rate (BER), Frame Error Rate (FER), and Channel Quality Indicator (CQI). Further, the travel speed of the terminal can be determined with built-in GPS (global positioning system) for example, but other navigation device known to artisians in this art.

When the checked communication quality is lower than a preset communication quality or level, the decision part 103 selects service coverage areas of one or more neighbor networks exceeding the preset communication quality by considering the travel speed of the portable terminal, and selects a particular service coverage area of a second network among the service coverage areas of the selected neighbor networks by considering improvement of the communication quality of the portable terminal. Then, the execution part 104 executes the handover to the service coverage area of the selected second network.

The input 105 provides input data generated by user's selection to the controller 101. The display 106 displays state information of the portable terminal, a menu screen, and story information under the control of the controller 101. For example, the display 106 can be implemented using a touch screen.

The storage 107 can include a program storage for storing a program to control the portable terminal, and a data storage for storing data generating in the program execution. The communication module 108 processes signals transmitted and received over an antenna for voice and data communication. The audio processor 109 processes audio signals input and output through the portable terminal.

As constructed above, the controller 101 can perform the overall functions of the terminal. Herein, for illustrative purposes, the components are separately equipped to distinguish their functions. Accordingly, in the actual implementation, the controller 101 may process all or a part of the functions of the terminal.

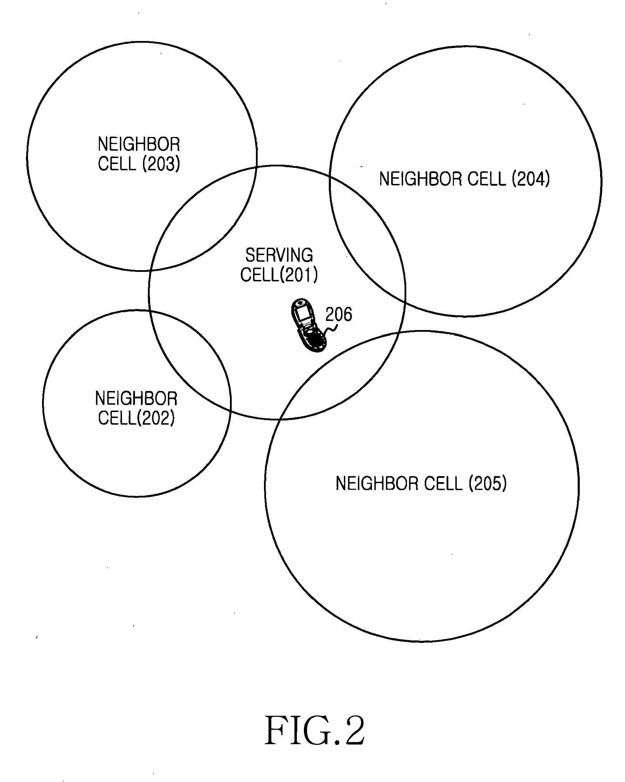

FIG. 2 depicts a first network, neighbor networks, and a second network to where a handover method of the portable terminal useful for understanding the present invention can be applied. Referring to FIG. 2, a portable terminal 206 travels in a service coverage area of the serving cell 201, and service coverage areas of one or more neighbor cells 202 through 205. The service coverage areas of one or more neighbor cells 202 through 205 may have different coverage area size each other.

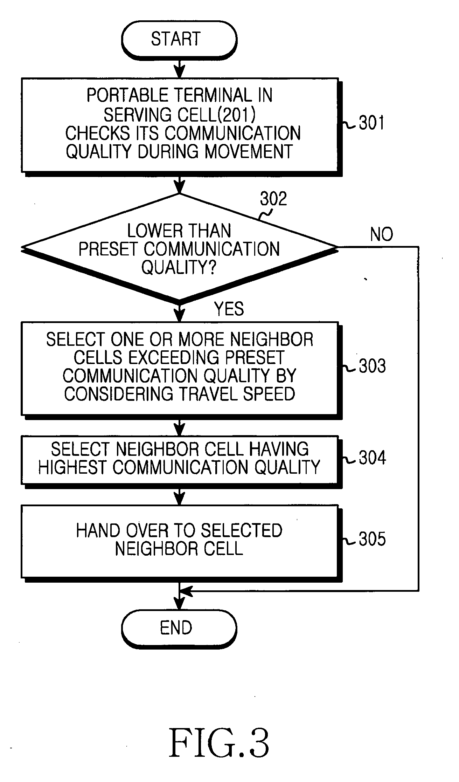

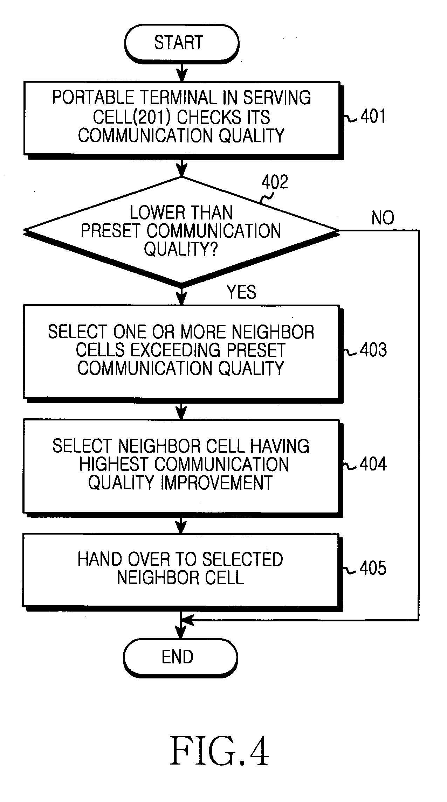

As shown, the serving cell 201 indicates a serving cell for currently servicing the portable terminal 206, and the neighbor cells 202 through 205 indicate neighbor cells around the serving cell **201.** That is, the cell currently servicing the portable terminal 206 is the serving cell 201. As the portable terminal 206 travels, a new serving cell can be one of the neighbor cells 202 through 205. The neighbor cell 205 may be a new serving cell, among the neighbor cells 202 through 205, to which the portable terminal 206 hands over from the serving cell 201. The serving cell 201 may be controlled by a first network, while the neighbor cell 205 may be controlled by a second network as neighbor network being different from the first network. A detailed explanation of the inventive handover process is explained hereinafter with reference to FIGs. 3 and 4.

FIG. 3 is a chronological flowchart of the handover method of the portable terminal considering the travel speed of the portable terminal useful for understanding the present invention. As shown in FIG. 3, the portable terminal in the serving cell 201 checks and monitors its communication quality during the movement in step 301. While the portable terminal is in the serving cell 201, the communication quality can degrade according to its movement.

Thus, to hand over to the neighbor network with a higher communication quality without overhead, the portable terminal continuously checks its communication quality. When the portable terminal hands over to the service coverage of the neighbor cells without considering its travel speed as in the prior art, it causes frequent handovers which in turn cause an unnecessary overhead. Herein, the communication quality can use any one of the RSSI (Received Signal Strength Indicator), the SNR (Signal to Noise Ratio), the SINR (Signal-to-Interference plus Noise Ratio), the BER (Bit Error Rate), the FER (Frame Error Rate), and the CQI (Channel Quality Indicator).

In step 302, the portable terminal determines whether its communication quality is lower than a preset communication quality. When the checked communication quality falls below the preset communication quality in step 302, the portable terminal selects one or more neighbor cells exceeding the preset communication quality by considering its travel speed as candidate neighbor cells for selection in step 303.

More specifically, the neighbor cells as candidate neighbor cells may be selected in a descending order of the serviceable time of the neighbor cells for the portable terminal by considering service coverage area size information of the neighbor cells and travel speed information of the portable terminal. For example, if the neighbor cells have the same service coverage area size, as the travel speed of the portable terminal is fast, the serviceable time decreases. If the travel speed of the portable terminal is the same in all neighbor cells, the serviceable time of neighbor cells having the larger service coverage area size increases. Also, the neighbor cells may be selected in a descending order of the capacity of the neighbor cell. The portable terminal receives the service coverage area size information of the neighbor cells from the second network as the neighbor network, or the first network.

The meaning of considering the travel speed of the portable terminal means that the cell size of the neighbor cells of various cell sizes and the travel speed of the portable terminal are considered. For example, as shown in table 1 below, when the speed (V1<V2<V3) of the portable terminal is lower than V1 (low speed), C1 through C5 (cell size: C1<C2<C3<C4<C5) exceeding the preset communication quality are selected as the neighbor networks. When the speed of the portable terminal is V1 ~ V2, C2 through C5, excluding C1 of the smallest cell size, exceeding the preset communication quality are selected as the neighbor networks. Likewise, when the speed of the portable terminal is V2 ~ V3, C3, C4 and C5, excluding C1 and C2 of the small cell, are selected as the neighbor networks among the neighbor networks C1 through C5 exceeding the preset communication quality.

[Table 1]

| Travel speed of the portable terminal | Candidate Neighbor Cell |
|---|---|
| below V1 (low) | C1, C2, C3, C4, C5 |
| V1 - V2 | C2, C3, C4, C5 |
| V2 - V3 | C3, C4, C5 |
| V4 - V5 | C4, C5 |
| above V5 (high) | C5 |

In step 304, the portable terminal selects the neighbor cell having the highest communication quality from the selected neighbor cells as candidate neighbor cells. Next, the portable terminal hands over to the service coverage area of the selected neighbor cell as the new serving cell in step 305, and finishes this handover process. When exceeding the preset communication quality in step 302, the portable terminal finishes the process without handing over.

While the method of FIG. 3 explains that the portable terminal selects the handover, the first network of the serving cell 201 may select the handover by receiving the travel speed information and the communication quality information from the portable terminal.

FIG. 4 is a chronological flowchart of the handover method of the portable terminal based on the improvement of the communication quality according to an exemplary embodiment of the present invention. As shown in FIG. 4, the portable terminal in the service coverage area of the serving cell 201 checks its communication quality or level in step 401. Herein, the communication quality can use any one of the RSSI, the SNR, the SINR, the BER, the FER, and the CQI.

In step 402, the portable terminal determines whether its communication quality is lower than preset communication quality. When the checked communication quality falls below the preset communication quality in step 402, the portable terminal selects one or more neighbor cells exceeding the preset communication quality as candidate neighbor cells in step 403.

In step 404, the portable terminal selects the neighbor cell having the highest improvement of communication quality among the neighbor cells as the candidate neighbor cells. Herein, the improvement of the communication quality is given by Equation 1.

$$Qual\_Improve(t+1) = (1-\alpha) \times Qual\_Improve(t) + \alpha \times Qual\_Diff \qquad \dots(1)$$

$Qual\_$Improve($t$+1) denotes the improvement of the communication quality when the time is $t$+1, $Qual\_$Improve($t$) denotes the communication quality when the time is $t$, $Qual\_Diff$ denotes a difference between the communication quality at the time $t$+1 and the communication quality at the time $t$, and $\alpha$ denotes a reflection ratio of $Qual\_$Improve($t$).

Supposing that the travel speed of the portable terminal is in the range of V1 to V2, the improvements of the communication quality in the candidate neighbor cells C2 through C5 may be monitored as shown in Table 2 below. The values of the improvements of the communication quality are calculated by Equation 1, in which the value $\alpha$ is 0.7.

[Table 2]

| Cells | Current RSSI (at t3) | RSSI (at t2) | RSSI at t1 | Communication Quality Improvement |
|-------|----------------------|--------------|------------|-----------------------------------|
| C2 | -60dBm | -63dBm | -70dBm | 4.2 |
| C3 | -75dBm | -65dBm | -70dBm | 0.5 |
| C4 | -80dBm | -80dBm | -70dBm | 3 |
| C5 | -85dBm | -100dBm | -105dBm | 12 |

As for the improvement of the communication quality, in a graph with the x axis indicating the time t and the y axis indicating the communication quality, the time is t1, t2, t3 and t4 and the respective communication quality values are marked in the graph and interconnected. In result, three slope values are produced. Of the three slope values, the most recent slope value is weighted. That is, the slope between the communication qualities of t3 and t4 is more weighted than the slope between the communication qualities of t1 and t2. The weight can be obtained from the given $\alpha$. For example, when $\alpha$ is 0.1, 90% of the most recent slope value is reflected. In other words, 10% of the past value is reflected.

The considering of the improvement of the communication quality in step 404 implies that the improvement of the communication quality is calculated in the neighbor cells and the neighbor cell of the greatest communication quality improvement is selected as the new serving cell.

Upon selecting the new serving cell, the portable terminal hands over to the service coverage area of the selected neighbor cell as the new serving cell in step 405, and finishes the handover process. When exceeding the preset communication quality in step 402, the portable terminal finishes the process without handing over.

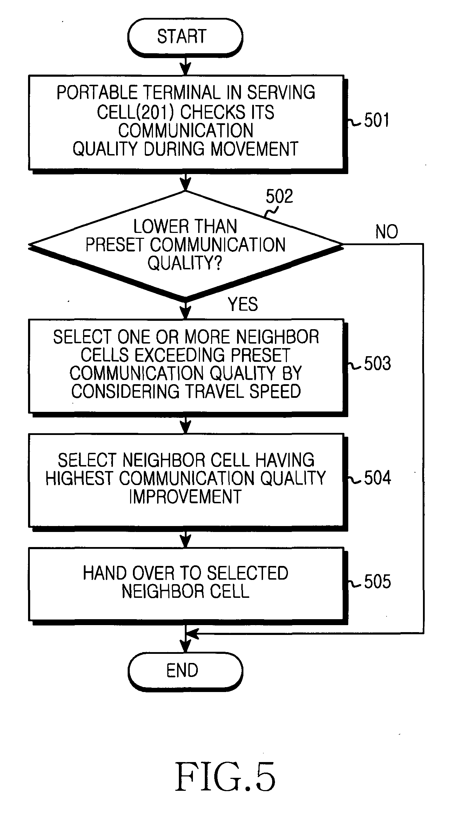

While the method of FIG. 4 explains that the portable terminal selects the handover, the first network may select the handover by receiving the communication quality improvement information of the portable terminal from the portable terminal. FIG. 5 is a chronological flowchart of the handover method of the portable terminal based on the travel speed and the communication quality of the portable terminal according to an exemplary embodiment of the present invention. As shown in FIG. 5, the portable terminal in the serving cell 201 checks its communication quality during the movement in step 501. That is, although the portable terminal is in the serving cell 201, the communication quality can degrade according to the movement of the portable terminal.

Hence, to hand over to the neighbor cell of high communication quality without overhead, the portable terminal continuously checks its communication quality. Herein, the communication quality can use any one of the RSSI, the SNR, the SINR, the BER, the FER, and the CQI.

In step 502, the portable terminal determines whether its communication quality is lower than the preset communication quality. When the checked communication quality falls below the preset communication quality in step 502, the portable terminal selects one or more neighbor cells exceeding the preset communication quality by considering its travel speed in step 503.

More specifically, the neighbor cells as candidate neighbor cells may be selected in the descending order of the serviceable time of the neighbor cells for the portable terminal by considering the service coverage area size information of the neighbor cells and the travel speed information of the portable terminal. Also, the neighbor networks are selected in the descending order of the capacity of the neighbor cell. The portable terminal receives the service coverage area size information of the neighbor cells from the second network as the neighbor network, or the first network. The considering of the travel speed of the portable terminal has been described earlier and thus shall be omitted.

In step 504, the portable terminal selects the neighbor cell having the highest communication quality improvement from the selected neighbor cells as candidate neighbor cells. Herein, the communication quality improvement has been described earlier and thus shall be omitted.

Next, the portable terminal hands over to the service coverage area of the selected neighbor cell as the new serving cell in step 505, and finishes the handover process. When exceeding the preset communication quality in step 502, the portable terminal finishes the process without handing over.

While the method of FIG. 5 explains that the portable terminal selects the handover, the first network may select by receiving the travel speed information and the communication quality improvement information of the portable terminal from the portable terminal.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the invention has been shown and described with reference to certain exemplary embodiments thereof, it will be understood by those skilled in the art that various changes in form and details may be made therein without departing from the scope of the invention as defined by the appended claims.

**Claims**

1. A handover method of a portable terminal, comprising:

checking communication quality during a movement of the portable terminal in a service coverage area of a serving cell (501);
when the communication quality is lower than preset communication level (502),
determining one or more neighbor cells exceeding the preset communication level by considering a travel speed of the portable terminal (503);
selecting a neighbor cell from the determined neighbor cells by considering an improvement of the communication quality of the portable terminal (504); and
performing a hand over to the service coverage area of the selected neighbor cell(505), **characterized in that** the communication quality improvement is given by the following equation:

$$Qual\_\text{Improve}(t+1) = (1-\alpha) \times Qual\_\text{Improve}(t) + \alpha \times Qual\_Diff$$

where $Qual\_\text{Improve}(t+1)$ denotes communication quality improvement when a time is $t+1$, $Qual\_\text{Improve}(t)$ denotes communication quality when the time is $t$, $Qual\_Diff$ denotes a difference between the communication quality at the time $t+1$ and the communication quality at the time $t$, and $\alpha$ denotes a reflection ratio of *Qual_*Improve(t).

2. The handover method of claim 1, wherein the determining of the one or more neighbor cells comprises:

providing a descending order according to a size of the service coverage areas of the one or more neighbor cells, and depending on the speed of the portable terminal, selecting a specific coverage area from the descending order having a highest communication quality.

3. The handover method of claim 1, wherein the portable terminal receives information relating to the size of the service coverage areas from neighbor networks of the one or more cells.

4. The handover method of claim 1, wherein the selecting of the neighbor cell from the determined neighbor cells comprises:

selecting a specific neighbor cell having a highest communication quality among the determined neighbor cells.

5. The handover method of claim 1, wherein the selecting of the neighbor cell from the determined neighbor cells comprises:

selecting, at a network of the serving cell, the neighbor cell by receiving travel speed information and communication quality improvement information of the portable terminal from the portable terminal.

6. A handover apparatus of a portable terminal, comprising:

a monitoring part (102) configured to check a travel speed and communication quality during a movement of the portable terminal in a service coverage area of a serving cell;
a decision part (103) configured to, when the communication quality is lower than preset communication level, determine one or more neighbor cells exceeding the preset communication level by considering the travel speed of the portable terminal,
and select a neighbor cell from the determined neighbor cells by considering improvement of the communication quality of the portable terminal; and
an execution part (104) configured to hand over to the service coverage area of the selected neighbor cell, **characterized in that** the communication quality improvement is given by the following equation:

$$Qual\_\mathrm{Improve}(t+1) = (1-\alpha) \times Qual\_\mathrm{Improve}(t) + \alpha \times Qual\_Diff$$

where *Qual _*Improve(*t*+1) denotes communication quality improvement when a time is *t* + 1, *Qual_*Improve(t) denotes communication quality when the time is *t, Qual_Diff* denotes a difference between the communication quality at the time *t* + 1 and the communication quality at the time *t*, and $\alpha$ denotes a reflection ratio of *Qual_*Improve(*t*).

7. The handover method of any one of claims 1, or the handover apparatus of claim 6, wherein the communication quality is determined from any one of Received Signal Strength Indicator (RSSI), Signal to Noise Ratio (SNR), Signal-to-Interference-and-Noise Ratio (SINR), Bit Error Rate (BER), Frame Error Rate (FER), and Channel Quality Indicator (CQI).

**Patentansprüche**

1. Übergabeverfahren für ein tragbares Endgerät, das Folgendes umfasst:

Überprüfen der Kommunikationsqualität während einer Bewegung des tragbaren Endgerätes in einem Dienstversorgungsbereich einer bedienenden Zelle (501);
wenn die Kommunikationsqualität niedriger als ein voreingestellter Kommunikationswert (502) ist, Feststellen einer oder mehrerer Nachbarzellen, die den voreingestellten Kommunikationswert übersteigen, unter Berücksichtigung einer Bewegungsgeschwindigkeit des tragbaren Endgerätes (503);

Auswählen einer Nachbarzelle aus den festgestellten Nachbarzellen unter Berücksichtigung einer Verbesserung der Kommunikationsqualität des tragbaren Endgerätes (504); und

Ausführen einer Übergabe an den Dienstversorgungsbereich der ausgewählten Nachbarzelle (505), **dadurch gekennzeichnet, dass** die Verbesserung der Kommunikationsqualität durch folgende Gleichung gegeben ist:

```
Qual_Improve(t+1) = (1-α) × Qual_Improve(t) + α ×
Qual_Diff,
```

wobei Qual_Improve(t+1) die Verbesserung der Kommunikationsqualität bezeichnet, wenn eine Zeit t+1 ist, Qual_Improve(t) eine Kommunikationsqualität bezeichnet, wenn die Zeit t ist, Qual_Diff eine Differenz zwischen der Kommunikationsqualität zur Zeit t+1 und die Kommunikationsqualität zur Zeit t bezeichnet, und α ein Reflexionsverhältnis von Qual_Improve(t) bezeichnet.

2. Übergabeverfahren nach Anspruch 1, wobei das Feststellen der einen oder mehreren Nachbarzellen Folgendes umfasst:

Bereitstellen einer absteigenden Reihenfolge entsprechend einer Größe der Dienstversorgungsbereiche der einen oder mehreren Nachbarzellen, und in Abhängigkeit von der Geschwindigkeit des tragbaren Endgerätes, Auswählen eines konkreten Versorgungsbereichs aus der absteigenden Reihenfolge mit einer höchsten Kommunikationsqualität.

3. Übergabeverfahren nach Anspruch 1, wobei das tragbare Endgerät Informationen bezüglich der Größe der Dienstversorgungsbereiche von Nachbarnetzen der einen oder mehreren Zellen empfängt.

4. Übergabeverfahren nach Anspruch 1, wobei das Auswählen der Nachbarzelle aus den festgestellten Nachbarzellen Folgendes umfasst:

Auswählen einer konkreten Nachbarzelle mit einer höchsten Kommunikationsqualität unter den festgestellten Nachbarzellen.

5. Übergabeverfahren nach Anspruch 1, wobei das Auswählen der Nachbarzelle aus den festgestellten Nachbarzellen Folgendes umfasst:

Auswählen, in einem Netz der bedienenden Zelle, der Nachbarzelle durch Empfangen von Bewegungsgeschwindigkeitsinformationen und Kommunikationsqualitätsverbesserungsinformationen des tragbaren Endgerätes von dem tragbaren Endgerät.

6. Übergabevorrichtung eines tragbaren Endgerätes, die Folgendes umfasst:

einen Überwachungsteil (102), der dafür konfiguriert ist, eine Bewegungsgeschwindigkeit und Kommunikationsqualität während einer Bewegung des tragbaren Endgerätes in einem Dienstversorgungsbereich einer bedienenden Zelle zu überprüfen;

einen Entscheidungsteil (103), der dafür konfiguriert ist, wenn die Kommunikationsqualität niedriger als ein voreingestellter Kommunikationswert ist, eine oder mehrere Nachbarzellen, die den voreingestellten Kommunikationswert übersteigen, unter Berücksichtigung der Bewegungsgeschwindigkeit des tragbaren Endgerätes festzustellen und eine Nachbarzelle aus den festgestellten Nachbarzellen unter Berücksichtigung einer Verbesserung der Kommunikationsqualität des tragbaren Endgerätes auszuwählen; und

einen Ausführungsteil (104), der dafür konfiguriert ist, eine Übergabe an den Dienstversorgungsbereich der ausgewählten Nachbarzelle auszuführen, **dadurch gekennzeichnet, dass** die Verbesserung der Kommunikationsqualität durch folgende Gleichung gegeben ist:

```
Qual_Improve(t+1) = (1-α) × Qual_Improve(t) + α ×
Qual_Diff,
```

wobei Qual_Improve(t+1) die Verbesserung der Kommunikationsqualität bezeichnet, wenn eine Zeit t+1 ist, Qual_Improve(t) eine Kommunikationsqualität bezeichnet, wenn die Zeit t ist, Qual_Diff eine Differenz zwischen der Kommunikationsqualität zur Zeit t+1 und die Kommunikationsqualität zur Zeit t bezeichnet, und α ein Reflexionsverhältnis von Qual_Improve(t) bezeichnet.

**7.** Übergabeverfahren nach einem der Ansprüche 1, oder die Übergabevorrichtung nach Anspruch 6, wobei die Kommunikationsqualität anhand eines Empfangssignalstärkeindikators (Received Signal Strength Indicator, RSSI), eines Signal-Rausch-Verhältnisses (Signal to Noise Ratio, SNR), eines Signal-Interferenz-und-Rauschverhältnisses (Signal-to-Interference-and-Noise Ratio, SINR), einer Bitfehlerrate (Bit Error Rate, BER), einer Framefehlerrate (Frame Error Rate, FER) und eines Kanalqualitätsindikators (Channel Quality Indicator, CQI) festgestellt wird.

**Revendications**

**1.** Procédé de transfert d'un terminal portable, comprenant :

le contrôle d'une qualité de communication au cours d'un déplacement du terminal portable dans une zone de couverture de service d'une cellule de desserte (501) ;
lorsque la qualité de communication est inférieure à un niveau de communication préréglé (502), la détermination d'une ou plusieurs cellules voisines dépassant le niveau de communication préréglé en tenant compte d'une vitesse de déplacement du terminal portable (503) ;
la sélection d'une cellule voisine parmi les cellules voisines déterminées en tenant compte d'une amélioration de la qualité de communication du terminal portable (504) ; et
l'exécution d'un transfert dans la zone de couverture de service de la cellule voisine sélectionnée (505), **caractérisé en ce que** l'amélioration de qualité de communication est donnée par l'équation suivante :

$$\text{Qual\_Improve(t+1)} = (1-\alpha) \times \text{Qual\_Improve(t)} + \alpha \times \text{Qual\_Diff}$$

où Qual_Improve(t+1) indique une amélioration de qualité de communication lorsqu'un temps est t+1, Qual_Improve(t) indique une qualité de communication lorsque le temps est t, Qual_Diff indique une différence entre la qualité de communication au temps t+1 et la qualité de communication au temps t, et α indique un taux de réflexion de Qual_Improve(t).

**2.** Procédé de transfert selon la revendication 1, dans lequel la détermination de l'une ou plusieurs cellules voisines comprend :

la fourniture d'un ordre décroissant en fonction d'une taille des zones de couverture de service de l'une ou plusieurs cellules voisines, et en fonction de la vitesse du terminal portable, la sélection d'une zone de couverture spécifique à partir de l'ordre décroissant ayant la plus grande qualité de communication.

**3.** Procédé de transfert selon la revendication 1, dans lequel le terminal portable reçoit des informations relatives à la taille des zones de couverture de service en provenance de réseaux voisins de l'une ou plusieurs cellules.

**4.** Procédé de transfert selon la revendication 1, dans lequel la sélection de la cellule voisine parmi les cellules voisines déterminées comprend :

la sélection d'une cellule voisine spécifique ayant la plus grande qualité de communication parmi les cellules voisines déterminées.

**5.** Procédé de transfert selon la revendication 1, dans lequel la sélection de la cellule voisine parmi les cellules voisines déterminées comprend :

la sélection, dans un réseau de la cellule de desserte, de la cellule voisine en recevant des informations de vitesse de déplacement et des informations d'amélioration de qualité de communication du terminal portable en provenance du terminal portable.

**6.** Appareil de transfert d'un terminal portable, comprenant :

une partie de surveillance (102) configurée pour contrôler une vitesse de déplacement et une qualité de communication au cours d'un déplacement du terminal portable dans une zone de couverture de service d'une cellule de desserte ;

une partie de décision (103) configurée pour, lorsque la qualité de communication est inférieure à un niveau de communication préréglé, déterminer une ou plusieurs cellules voisines dépassant le niveau de communication préréglé en tenant compte de la vitesse de déplacement du terminal portable, et sélectionner une cellule voisine parmi les cellules voisines déterminées en tenant compte d'une amélioration de la qualité de communication du terminal portable ; et

une partie d'exécution (104) configurée pour effectuer un transfert dans la zone de couverture de service de la cellule voisine sélectionnée, **caractérisé en ce que** l'amélioration de qualité de communication est donnée par l'équation suivante :

$$\text{Qual\_Improve}(t+1) = (1-\alpha) \times \text{Qual\_Improve}(t) + \alpha \times \text{Qual\_Diff}$$

où Qual_Improve(t+1) indique une amélioration de qualité de communication lorsqu'un temps est t+1, Qual_Improve(t) indique une qualité de communication lorsque le temps est t, Qual_Diff indique une différence entre la qualité de communication au temps t+1 et la qualité de communication au temps t, et $\alpha$ indique un taux de réflexion de Qual_Improve(t).

**7.** Procédé de transfert selon la revendication 1 ou appareil de transfert selon la revendication 6, dans lequel la qualité de communication est déterminée à partir de l'un d'un indicateur de force de signal reçu (RSSI), un rapport de signal sur bruit (SNR), un rapport de signal sur interférence et bruit (SINR), un taux d'erreur binaire (BER), un taux d'erreur de trame (FER) et un indicateur de qualité de canal (CQI).

FIG.1

FIG.2

```
                    ┌─────────────┐
                    │   START     │
                    └──────┬──────┘
                           ▼
        ┌──────────────────────────────────┐
        │      PORTABLE TERMINAL IN        │
        │        SERVING CELL(201)         │ ~301
        │    CHECKS ITS COMMUNICATION      │
        │     QUALITY DURING MOVEMENT      │
        └──────────────────┬───────────────┘
                           ▼
                                     302
                  ╱─────────────────╲
                 ╱    LOWER THAN      ╲         NO
                ╱  PRESET COMMUNICATION ╲──────────────┐
                ╲      QUALITY?        ╱               │
                 ╲───────────────────╱                │
                           │ YES                       │
                           ▼                           │
        ┌──────────────────────────────────┐          │
        │    SELECT ONE OR MORE NEIGHBOR   │          │
        │    CELLS EXCEEDING PRESET        │ ~303     │
        │    COMMUNICATION QUALITY BY      │          │
        │    CONSIDERING TRAVEL SPEED      │          │
        └──────────────────┬───────────────┘          │
                           ▼                           │
        ┌──────────────────────────────────┐          │
        │   SELECT NEIGHBOR CELL HAVING    │ ~304     │
        │  HIGHEST COMMUNICATION QUALITY   │          │
        └──────────────────┬───────────────┘          │
                           ▼                           │
        ┌──────────────────────────────────┐          │
        │     HAND OVER TO SELECTED        │ ~305     │
        │         NEIGHBOR CELL            │          │
        └──────────────────┬───────────────┘          │
                           ▼◄──────────────────────────┘
                    ┌─────────────┐
                    │    END      │
                    └─────────────┘
```

# FIG.3

START

PORTABLE TERMINAL IN SERVING CELL(201) CHECKS ITS COMMUNICATION QUALITY ~401

402

LOWER THAN PRESET COMMUNICATION QUALITY? — NO

YES

SELECT ONE OR MORE NEIGHBOR CELLS EXCEEDING PRESET COMMUNICATION QUALITY ~403

SELECT NEIGHBOR CELL HAVING HIGHEST COMMUNICATION QUALITY IMPROVEMENT ~404

HAND OVER TO SELECTED NEIGHBOR CELL ~405

END

FIG.4

START

PORTABLE TERMINAL IN SERVING
CELL(201) CHECKS ITS
COMMUNICATION
QUALITY DURING MOVEMENT — 501

LOWER THAN
PRESET COMMUNICATION
QUALITY? — 502

NO

YES

SELECT ONE OR MORE NEIGHBOR
CELLS EXCEEDING PRESET
COMMUNICATION QUALITY BY
CONSIDERING TRAVEL SPEED — 503

SELECT NEIGHBOR CELL HAVING
HIGHEST COMMUNICATION QUALITY
IMPROVEMENT — 504

HAND OVER TO SELECTED
NEIGHBOR CELL — 505

END

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1215930 A2